(19) Europäisches Patentamt
European Patent Office
Office européen des brevets

(11) **EP 2 840 010 A1**

(12) **DEMANDE DE BREVET EUROPEEN**

(43) Date de publication:
**25.02.2015 Bulletin 2015/09**

(51) Int Cl.:
**B61L 3/12** (2006.01) **B61L 15/00** (2006.01)
**B61L 27/00** (2006.01)

(21) Numéro de dépôt: **13290197.6**

(22) Date de dépôt: **21.08.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **Siemens S.A.S.**
**93527 Saint-Denis Cedex 2 (FR)**

(72) Inventeurs:
• **De Lajudie-Dezellus, Raphaëlle**
**92120 Montrouge (FR)**
• **Nogueira Alves, Clara**
**92130 Issy Les Moulineaux (FR)**

(74) Mandataire: **Maier, Daniel Oliver et al**
**Siemens AG**
**Postfach 22 16 34**
**80506 München (DE)**

(54) **Méthode et système de transfert de données haut débit bi-directionnel pour un mobile en déplacement le long d'une voie**

(57)　La présente invention décrit une méthode et un système de transfert de données entre un mobile (2) et n dispositifs sol, ledit mobile (2) étant destiné à parcourir un chemin (1) entre une position initiale A et une position finale B, ledit système de transfert comprenant :
- au moins un émetteur/récepteur (21) et une mémoire (22) destinés à être embarqués à bord dudit mobile (2) ;
- lesdits n dispositifs sols respectivement notés $AP_1$, ..., $AP_n$, le dispositif sol $AP_i$ étant destiné à être disposé à une position Si d'arrêt temporaire dudit mobile le long dudit chemin, chaque dispositif sol comprenant un émetteur/récepteur (11) configuré pour communiquer avec l'émetteur/récepteur (21) embarqué à bord dudit mobile (2);

ladite mémoire (22) embarquée à bord dudit mobile (2) étant configurée pour automatiquement stocker lesdites données durant le parcours dudit chemin entre A et B par ledit mobile (2) et pour automatiquement déstocker au moins une partie desdites données stockées à chaque arrêt dudit mobile (2) à une position Si, ledit émetteur-récepteur (21) embarqué à bord dudit mobile (2) étant configuré pour transmettre lesdites données déstockées à l'émetteur-récepteur (11) du dispositif sol $AP_i$ durant un intervalle de temps $T_i$ inférieur ou égal au temps d'arrêt dudit mobile à ladite position Si.

FIG 1

EP 2 840 010 A1

## Description

La présente invention concerne une méthode et un système de transfert de données à haut débit et bidirectionnel entre un mobile et des stations fixes réparties le long d'une voie de circulation dudit mobile selon le préambule des revendications 1 et 7.

La présente invention concerne de manière générale tout mobile configuré pour se déplacer le long d'une voie de circulation, notamment de manière totalement automatisée et dans une infrastructure permettant l'échange de données entre les mobiles et des bases fixes gérées par un système de commande centralisée. En particulier, la présente invention s'adresse aux véhicules guidés, i.e. les moyens de transport en commun tels que des bus, trolleybus, tramways, métros, trains ou unités de train, etc., ainsi qu'aux moyens de transport de charge tel que, par exemple, les ponts roulants, pour lesquels l'aspect sécuritaire est très important et pour lesquels le guidage est assuré en particulier par au moins un rail disposé sur la voie ou piste de circulation.

Selon les techniques actuelles, les données transmises d'un mobile, par exemple un train, au sol et du sol au mobile correspondent à des informations sécuritaires comme le positionnement géographique, la vitesse ainsi qu'un ensemble de données de sécurité ou non servant à l'opération automatique dudit mobile (par exemple, constitution et longueur du train, informations de maintenance, etc.). Ces données sont transmises de façon continue et bidirectionnelle grâce à un système de transmission radio embarqué à bord du mobile et de bases radio réparties le long de la voie de circulation dudit mobile. Il est possible de transmettre des données audio ou vidéo provenant de microphones ou de capteurs d'images présents à bord du mobile, ou inversement de faire parvenir des données "informations voyageurs/passagers" vers le mobile.

Un problème récurrent de ce genre de transfert de données est que les données volumineuses comme des images vidéo ne sont transmises au sol souvent que de façon partielle et dégradée, car trop consommatrices de bande passante. Généralement, seuls quelques flux vidéo sont transmis à un poste de commande centralisée sur requête d'un opérateur sol ou suite à un évènement particulier comme un appel sur un interphone. Les autres flux de données, par exemple des flux vidéos, sont stockés dans des dispositifs de stockage embarqués à bord du mobile, par exemple dans des disques durs, lesdits dispositifs de stockage étant récupérés par extraction manuelle du dispositif de stockage ou par déchargement filaire ou sans fil à pied d'oeuvre (i.e. transfert point à point haut débit de proximité) dans des zones dédiées comme des garages.

Ainsi, les techniques actuelles sont obligées de limiter les débits ascendants et montants mobile-sol au profit de la continuité de la transmission de données de sécurité liées à l'opération du mobile. Une perte de transmission des données de sécurité trop longue en durée serait en effet néfaste et induirait automatiquement un passage du mobile dans un état sûr, en forçant par exemple ledit mobile à un arrêt d'urgence.

Un objectif de la présente invention est de garantir et permettre une transmission rapide et complète de données volumineuses non sécuritaire depuis/vers un mobile lors de son parcours le long d'une voie de circulation, ladite transmission ne devant en aucune manière entraver la bande passante dédiée au transfert de données sécuritaires entre le mobile et un poste de commande.

Afin de parvenir à cet objectif, une méthode et un système sont proposés par le contenu des revendications 1 et 7.

Un ensemble de sous-revendications présente également des avantages de l'invention.

La présente invention se rapporte à une méthode de transfert de données entre un mobile et n dispositifs sol, ledit mobile étant destiné à parcourir un chemin, en particulier prédéfini, entre une position initiale A et une position finale B, et lesdits n dispositifs sol étant respectivement notés $AP_1$ ,..., $AP_n$, avec $n \geq 1$ et $AP_i$ désignant le $i^{ème}$ dispositif sol rencontré par ledit mobile lors de son déplacement de la position initiale A à la position finale B, le dispositif sol $AP_i$ étant disposé à une position Si d'arrêt temporaire dudit mobile le long dudit chemin, par exemple en station, chaque dispositif sol étant configuré pour échanger au moins une donnée avec ledit mobile, la méthode comprenant les étapes suivantes :

- lors du parcours dudit chemin par ledit mobile, un stockage temporaire de données dans une mémoire du dispositif sol et/ou du mobile, le temps de stockage durant lequel lesdites données sont stockées étant en particulier inférieur ou égal au temps TR requis par ledit mobile pour parcourir ledit chemin de A à B, ladite mémoire dudit mobile et/ou dudit dispositif sol étant par exemple une mémoire tampon ;
- à chaque arrêt temporaire dudit mobile à une position Si entre ladite position initiale A et ladite position finale B, un déstockage automatique d'au moins une partie desdites données stockées, au moyen d'une transmission par rafale desdites données entre le mobile et ledit dispositif sol $AP_i$ durant un intervalle de temps $T_i$ inférieur ou égal au temps d'arrêt dudit mobile à ladite position Si.

La présente invention concerne également un système de transfert de données entre un mobile et n dispositifs sol, ledit mobile étant destiné à parcourir un chemin entre une position initiale A et une position finale B, ledit système de transfert comprenant :

- au moins un émetteur/récepteur et une mémoire destinés à être embarqués à bord dudit mobile, ledit émetteur-récepteur étant apte à communiquer avec un émetteur/récepteur de chacun desdits dispositifs sol et ladite mémoire étant configurée pour stocker au moins temporairement lesdites données;

- lesdits n dispositifs sols respectivement notés $AP_1$,..., $AP_n$, avec $n \geq 1$ et $AP_i$ désignant le $i^{ème}$ dispositif sol avec i = 1, ..., n, les dispositifs sol $AP_1$, ..., $AP_n$ étant destinés à être disposés successivement le long dudit chemin entre la position initiale A et la position finale B, chaque dispositif sol $AP_i$ étant destiné à être disposé à une position Si d'arrêt temporaire dudit mobile le long dudit chemin, chaque dispositif sol étant configuré pour échanger au moins une donnée avec ledit mobile, chaque dispositif sol comprenant un émetteur/récepteur configuré pour communiquer avec l'émetteur/récepteur destiné à être embarqué à bord dudit mobile ;

ladite mémoire embarquée à bord dudit mobile étant configurée pour automatiquement stocker lesdites données durant le parcours dudit chemin entre A et B par ledit mobile et pour automatiquement déstocker au moins une partie desdites données stockées à chaque arrêt temporaire dudit mobile à une position Si entre ladite position initiale A et ladite position finale B, ledit émetteur-récepteur embarqué à bord dudit mobile étant configuré pour transmettre, notamment par rafale, lesdites données déstockées à l'émetteur-récepteur du dispositif sol $AP_i$ durant un intervalle de temps $T_i$ inférieur ou égal au temps d'arrêt dudit mobile à ladite position Si.

Ainsi, la présente invention propose une transmission spatialement et temporellement discontinue de données entre ledit mobile et les dispositifs sol, ladite transmission étant automatisée et s'effectuant en particulier à haut débit. Un mobile et une voie de circulation dudit mobile comprenant ledit chemin de la position initiale A à la position finale B sont également revendiqués, ledit mobile et ladite voie étant équipés du système de transfert de données tel que précédemment décrit et dont des modes de réalisations préférentiels sont donnés ci-dessous.

Préférentiellement, lesdites données destinées à être stockées dans ladite mémoire sont uniquement transmises à un dispositif sol, ou respectivement audit mobile, par ledit émetteur-récepteur lorsque ledit mobile est à l'arrêt à une desdites positions Si d'arrêt. En d'autres termes, selon un mode préférentiel de réalisation de la présente invention, le système de transfert de données est capable de collecter des données au moyen d'un dispositif de traitement des données, lesdites données provenant par exemple de différents dispositifs embarqués ou au sol auxquels ledit dispositif de traitement des données est connectable par des moyens filaires ou sans fil. Le dispositif de traitement des données est en particulier programmé pour que les données stockées dans ladite mémoire embarquée à bord du mobile soient transmises à un dispositif sol si et seulement si ledit mobile est à l'arrêt à une position Si d'arrêt. Ainsi, tant que le mobile est en déplacement entre un dispositif sol $AP_{i-1}$ et le prochain dispositif sol, i.e. le dispositif sol $AP_i$, aucune donnée stockée dans ladite mémoire dudit mobile n'est transmise à l'extérieur dudit mobile, par exemple au moyen d'une communication à distance à un poste de commande centralisée. Ledit dispositif de traitement de données étant ainsi capable d'amorcer un déstockage de données préalablement stockées dans la mémoire embarquée à bord dudit mobile si et seulement si ledit mobile s'arrête à une position Si au voisinage d'un dispositif sol $AP_i$.

Préférentiellement, la méthode selon l'invention comprend un traitement desdites données stockées dans la mémoire embarquée dans ledit mobile, ledit traitement étant configuré pour former des paquets de données. A cette fin, le dispositif de traitement de données embarqué à bord dudit mobile est en particulier capable de préparer lesdites données stockées en vue de leur déstockage, puis préférentiellement d'amorcer leur déstockage lorsque ledit mobile est à l'arrêt à une position Si au voisinage d'un dispositif sol $AP_i$. Ledit dispositif de traitement de données est en particulier configuré pour créer des paquets de données $P_i$ à partir des données stockées dans ladite mémoire embarquée, de façon préférentiellement à ce que le nombre de paquets de données formé durant le déplacement dudit mobile de la position initiale A à la position finale B soit égale à n, les paquets étant notés $P_1$, ..., $P_n$, $P_i$ étant le $i^{ème}$ paquet, chaque paquet formé comprenant au moins une partie desdites données stockées dans ledit mobile. En particulier, ladite partie de données déstockées à une position Si dudit mobile est le paquet $P_i$ de données, ledit dispositif de traitement étant préférentiellement capable d'amorcer à chaque arrêt dudit mobile à une position Si le déstockage du paquet $P_i$ destiné à être transmis au dispositif sol $AP_i$. En particulier, par coopération avec ledit dispositif de traitement, ladite mémoire est capable de déstocker uniquement le paquet $P_i$ lors de l'arrêt dudit mobile à la position Si d'arrêt. Préférentiellement, chaque paquet de données est créé et optimisé par ledit dispositif de traitement de données en fonction dudit intervalle de temps $T_i$ et du débit de la transmission entre le mobile et le dispositif sol $AP_i$ à la position Si. Avantageusement, la méthode selon l'invention permet ainsi de préparer avant chaque arrêt dudit mobile un volume de données en adéquation avec les caractéristiques de débits respectif du mobile et du dispositif sol afin d'optimiser le transfert de données du mobile au dispositif sol ou du dispositif sol au mobile.

Ainsi, ladite transmission par rafale des données déstockées par la mémoire embarquée et transmises par ledit émetteur-récepteur embarqué est caractérisée par un découpage prédéfini desdites données en paquets $P_i$ par ledit dispositif de traitement de données. Comme expliqué précédemment, ce traitement desdites données par découpage prédéfini des données est réalisé en fonction de paramètres intervenant dans la quantité de données susceptibles d'être échangées à chaque arrêt dudit mobile au voisinage d'un dispositif sol $AP_i$. Ces paramètres sont par exemple l'intervalle de temps

$T_i$, la quantité de données par seconde pouvant être reçu/transmis par le mobile ou le dispositif sol, mais ils peuvent également concerner une hiérarchisation des données devant être transmises, par exemple afin de transmettre un type de données satisfaisant une requête d'un poste de commande centralisée. Ainsi, la présente méthode permet de préparer avant chaque arrêt dudit mobile au voisinage d'un dispositif sol $AP_i$, un paquet $P_i$ de données ayant des caractéristiques (p. ex. volume de données, et/ou type de données, etc.) prédéfinies afin d'optimiser l'échange de données entre le dispositif sol et le mobile.

Préférentiellement, chaque paquet de données est numéroté et daté par ledit dispositif de traitement de données. En particulier, une indication permettant de déterminer la provenance dudit paquet, par exemple le numéro du mobile, et/ou d'une rame, et/ou d'un capteur est insérée dans ledit paquet par ledit dispositif de traitement de données. Préférentiellement, chaque paquet est constitué d'un ensemble de sous-paquets pouvant être numérotés et datés afin de pouvoir déterminer et retracer leur provenance.

Préférentiellement, le volume total $V_T$ de données stockées ou enregistrées dans la mémoire dudit mobile est caractérisé par :

$$V_T \leq \sum_n D_i \cdot T_i \qquad (1)$$

où $D_i$ est le débit net (exprimé en nombre de données par seconde) de la transmission entre le mobile et le dispositif sol $AP_i$, et $T_i$ est le temps exprimé en seconde durant lequel ladite transmission entre le mobile et le dispositif sol $AP_i$ a lieu. De cette façon, il est avantageusement possible de garantir que la totalité des données enregistrées durant le parcours dudit mobile du chemin de A à B a été transmise à un poste de commande centralisée via chacun desdits dispositifs sols.

Préférentiellement, la présente invention comprend, une classification, par ledit dispositif de traitement de données, de chaque donnée, par exemple collectée à bord dudit mobile ou de dispositifs au sol, dans une des deux catégories suivantes : une première catégorie comprenant par exemple uniquement des données sécuritaires, et une seconde catégorie comprenant par exemple uniquement des données non-sécuritaires, les données de ladite première catégorie étant destinées à être transmises en temps réel à un poste de commande centralisée ou audit mobile, et lesdites données de la seconde catégorie, par exemple lesdites données non-sécuritaires, étant destinées à être stockées dans ladite mémoire dudit mobile ou dudit dispositif sol pour être uniquement transmise à chaque arrêt dudit mobile à ladite position Si.

Ainsi, selon un mode préférentiel de réalisation de l'invention, seules les données de ladite seconde catégorie, en particulier les données non-sécuritaires, sont stockées, alors que les données de la première catégorie, en particulier les données sécuritaires, peuvent être stockées et/ou transmises en temps réel à un poste de commande centralisée ou audit mobile. En particulier, la transmission desdites données de la seconde catégorie a lieu uniquement durant le temps d'arrêt dudit mobile, et préférentiellement, la transmission desdites données de la première catégorie a lieu en temps réel durant le déplacement dudit mobile le long dudit chemin, mais peut également être stockée dans ladite mémoire du mobile ou du dispositif sol.

Selon la présente invention, des données sécuritaires sont des données comprenant des informations sécuritaires destinées à garantir un déplacement sûr dudit mobile. Ce sont donc des données susceptibles d'affecter le déplacement dudit mobile et uniquement relatives audit mobile en tant qu'objet. Ce sont par exemple le positionnement géographique du mobile, sa vitesse, des alertes de sécurité, des informations de constitution et longueur du train, des données audio entre un interphone et un poste de commande centralisée, des données audio entre un poste de commande centralisée et des hauts parleurs embarqués, des images requises en temps réel, etc. Les données sécuritaires sont des données nécessitant une transmission continue à un poste de commande centralisée afin de garantir ledit déplacement sûr du mobile. Les données non-sécuritaires selon la présente invention sont des données comprenant des informations ne nécessitant pas de transmission en temps réel, supportant donc une transmission en différé, et qui sont libres d'informations sécuritaires relatives au déplacement dudit mobile. Ce sont par exemple des images vidéos provenant de caméras de surveillance dudit mobile, des fichiers son provenant de microphone, etc.

En particulier, à chaque arrêt dudit mobile à une position Si, la méthode selon l'invention comprend un positionnement d'un émetteur/récepteur dudit mobile en vis-à-vis d'un émetteur/récepteur dudit dispositif sol $AP_i$ afin de permettre ledit transfert de données. En particulier, l'émetteur-récepteur embarqué dans ledit mobile est disposé, dans ledit mobile, à une position destinée à faire face à l'émetteur-récepteur du dispositif sol $AP_i$ lorsque ledit mobile est à l'arrêt à la position Si. Préférentiellement, la présente méthode comprend également une récupération par un poste de commande centralisée, auprès de chaque dispositif sol, des données transmises par ledit mobile audit dispositif sol à chaque arrêt dudit mobile. A cette fin, chaque dispositif sol est en particulier connecté audit poste de commande centralisée afin de transmettre, par exemple en temps réel, les données déstockées par ladite mémoire et reçues par ledit émetteur-récepteur dudit dispositif sol.

Afin de mieux comprendre la présente invention, un exemple de réalisation et d'application est fourni à l'aide de :

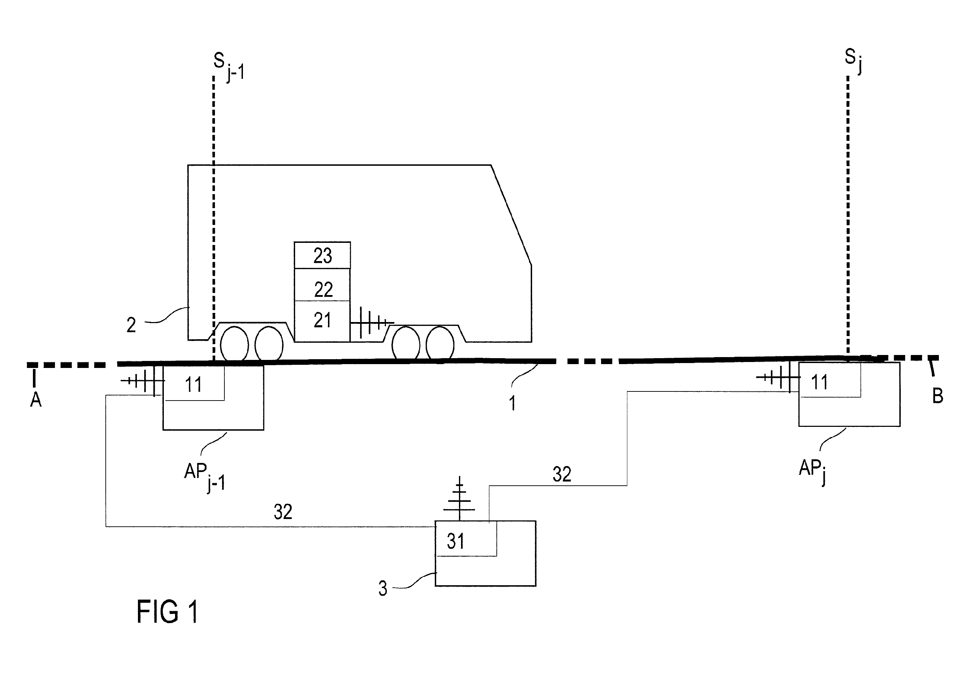

Figure 1    exemple de réalisation d'un système de transfert de données selon l'invention;

La figure 1 présente schématiquement une voie 1 de circulation pour un mobile 2, ladite voie 1 comprenant au moins un chemin s'étendant d'une position initiale A à une position finale B, ledit mobile 2, par exemple un véhicule guidé, étant destiné à circuler sur ladite voie 1. Ladite voie 1 et ledit mobile 2 sont en particulier équipés d'un système de transfert de données selon un mode préféré de réalisation de la présente invention. Ledit système de transfert de données selon ce mode de réalisation préféré comprend :

- n dispositifs sols $AP_1$,..., $AP_n$ disposés successivement le long de la voie 1 à proximité ou sur le chemin menant de la position initiale A à la position finale B, $AP_i$ désignant le $i^{ème}$ dispositif sol i = 1,...,n et n ≥ 1, seuls les dispositifs sols $AP_i$ et $AP_{i-1}$ étant représentés en Fig. 1. Chaque dispositif sol $AP_j$, $AP_{j-1}$ j allant de 2 à n, étant destiné à être disposé à une position $S_j$, $S_{j-1}$ d'arrêt temporaire dudit mobile 2 le long dudit chemin, chaque dispositif sol étant configuré pour échanger au moins une donnée avec un émetteur/récepteur 21 dudit mobile 2, chaque dispositif sol comprenant un émetteur/récepteur 11 configuré pour communiquer avec ledit émetteur/récepteur 21 ;

- au moins un émetteur/récepteur 21 et une mémoire 22 destinés à être embarqués à bord dudit mobile 2, ledit émetteur-récepteur 21 étant apte à communiquer avec ledit émetteur/récepteur 11 de chacun desdits dispositifs sol $AP_j$, $AP_{j-1}$ et ladite mémoire 22 étant configurée pour stocker au moins temporairement lesdites données ;

ladite mémoire 22 embarquée à bord dudit mobile 2 étant configurée pour automatiquement stocker lesdites données durant le parcours par ledit mobile dudit chemin entre A et B, et pour automatiquement déstocker au moins une partie desdites données stockées à chaque arrêt temporaire dudit mobile 2 à une position $S_j$, $S_{j-1}$ entre ladite position initiale A et ladite position finale B, ledit émetteur-récepteur 21 embarqué à bord dudit mobile 2 étant configuré pour transmettre par rafale lesdites données déstockées à l'émetteur-récepteur 11 du dispositif sol $AP_j$, $AP_{j-1}$ durant un intervalle de temps $T_i$ inférieur ou égal au temps d'arrêt dudit mobile 2 à ladite position Si. Préférentiellement, des données stockées dans ladite mémoire durant le parcours par ledit mobile du chemin séparant la position $S_{j-1}$ de la position $S_j$ peuvent être déstockées à la position $S_j$ ou à une position d'arrêt ultérieure, à la condition que, à la position finale B, l'ensemble des données stockées dans la mémoire 22 ait été déstocké.

En particulier, ledit mobile 2 peut être équipé d'un dispositif de traitement de données 23 tel que décrit précédemment. Ledit dispositif de traitement de données peut par exemple comprendre une logique et/ou une électronique programmable, et/ou un calculateur afin de pouvoir traiter lesdites données, et en particulier, les collecter, les regrouper, et gérer le stockage, déstockage desdites données dans ladite mémoire 22.

La transmission ou transfert desdites données entre ledit émetteur/récepteur 21 dudit mobile 2 et ledit émetteur/récepteur 11 dudit dispositif sol est en particulier une transmission à haut débit, non continue dans le temps et l'espace. Préférentiellement, les données provenant d'appareils embarqués à bord dudit mobile ou d'appareillages au sol et dont le caractère "temps réel" n'est pas nécessaire, sont temporairement stockées dans la mémoire 22, par exemple une mémoire tampon, avant d'être envoyées par rafale vers leur destination, par exemple un poste de commande centralisée 3, par déstockage discontinu via les dispositifs sols $AP_j$, $AP_{j-1}$ à chaque arrêt dudit mobile 2 auprès desdits dispositifs sols $AP_j$, $AP_{j-1}$, les dispositifs sols pouvant être connectés audit poste de commande centralisé par un réseau filaire ou radio.

Le transfert de données est ainsi réalisé en des points fixes répartis le long du trajet du mobile entre la position initiale A et la position finale B et où sont disposés à chaque fois un dispositif sol $AP_i$, lesdits points fixes étant en particulier des endroits où ledit mobile 2 doit s'arrêter durant son parcours, comme par exemple des stations ou des zones de garage. Le système de transfert de données selon l'invention est en particulier apte à coopérer avec un système de positionnement dudit mobile, par exemple un système ATO (Automatic Train Operation), permettant le positionnement précis du mobile de sorte que l'émetteur/récepteur 21 équipant ledit mobile soit placé en quasi vis-à-vis de l'émetteur/récepteur 11 du dispositif sol.

Selon la présente invention, la transmission des données est réalisée durant l'arrêt du mobile 2 à une position $S_j$, $S_{j-1}$ d'arrêt du mobile 2, par exemple en station. La transmission débute automatiquement après l'arrêt dudit mobile, et s'arrête automatiquement au moment du départ dudit mobile, et ne reprendra qu'au point de transfert suivant, i.e. à l'arrêt dudit mobile auprès du prochain dispositif sol. Préférentiellement, le débit des données et le nombre de dispositifs sol sont dimensionnés de manière à pouvoir vider la mémoire 22 du mobile à chaque arrêt dudit mobile 2. A chaque arrêt dudit mobile 2 à une position $S_j$, $S_{j-1}$ d'arrêt, un paquet $P_i$ de données préalablement préparé par ledit dispositif de traitement 23 est transféré audit dispositif sol. Le dispositif sol peut, durant le même arrêt dudit mobile, transférer des données à l'émetteur/récepteur 21 dudit mobile. Chaque paquet $P_i$ de données est préférentiellement constitué d'un ensemble de sous-paquets numérotés afin que le poste de commande centralisée 3 puisse récupérer via son émetteur/récepteur 31 ou un réseau filaire 32 la totalité des données stockées dans la mémoire 22 à bord du mobile 2 d'une façon libre de doublons. Préférentiellement, chaque paquet est daté et son origine (p. ex. numéro d'un véhicule guidé, d'une rame, d'un capteur,...)

est insérée dans la trame du paquet de données.

Lesdites données selon l'invention sont par exemple issues de capteurs embarqués (comme des caméras, microphone, odomètre, disques durs....), et d'autres proviennent d'appareillage au sol et sont transmises au mobile 2 durant son déplacement le long du chemin de A à B. En particulier, le dispositif de traitement 23 est capable de collecter toutes ces données, et de les traiter. Le dispositif de traitement 23, ladite mémoire 22 peuvent en particulier être connectés à différents appareils embarqués à bord dudit mobile afin de recevoir lesdites données. Ladite mémoire 22 est reliée entre autre audit émetteur/récepteur 21 par une liaison dimensionnée pour les débits visés.

La mémoire 22 est en particulier de type FIFO, i.e. « First In, First Out » et sa taille est suffisante pour qu'aucune donnée ne soit effacée avant d'avoir été transmise et sauvegardée au sol, par exemple de manière centralisée à un poste de commande centralisée 3. Avantageusement, la mémoire de type FIFO permet de déstocker les données dans l'ordre chronologique de leur enregistrement dans la mémoire 22 : la première donnée stockée est également la première donnée à être déstockée. Préférentiellement, lesdits paquets $P_i$ sont construits successivement par ledit dispositif de traitement de données à partir desdites données, ces dernières étant traitées dans leur ordre chronologique de stockage dans la mémoire 22 par le dispositif de traitement 23 afin de former chacun desdits paquets. En d'autres termes, le paquet $P_i$ comprendra les premières données stockées, et le paquet $P_n$ les dernières données stockées dans la mémoire 22.

Le mobile selon la présente invention est en particulier capable de s'arrêter à chacune desdites positions Si de façon à ce que l'émetteur/récepteur 21 l'équipant soit disposé en face de l'émetteur/récepteur 11 du dispositif sol durant un temps limité $T_i$ inférieur ou égal au temps d'arrêt dudit mobile 2. Préférentiellement, l'émetteur/récepteur 21 embarqué et ledit émetteur/récepteur 11 du dispositif sol communique l'un avec l'autre au moyen d'une liaison sans fil, par exemple liaison radio ou liaison par faisceau optique, tel que par exemple un faisceau laser. Préférentiellement, le système de positionnement dudit mobile est choisi de façon à être adapté à la précision de positionnement nécessaire pour garantir le transfert des données à la technologie sans fil utilisée.

Finalement, la méthode et le système de transfert de données selon l'invention permettent une transmission bidirectionnelle, spatialement et temporellement discontinue, de données stockées à bord d'un mobile vers des dispositifs au sol et inversement, ladite transmission pouvant être en particulier suivie d'une autre transmission desdits dispositifs sols vers un poste de commande centralisée afin de regrouper lesdites données et les traiter de manière centralisée. A l'inverse, le poste de commande centralisée peut également envoyer à différents dispositifs sols des paquets de données devant être successivement transmis à la mémoire embarquée à bord dudit mobile lors de ses arrêts successifs auxdites positions Si d'arrêt.

En résumé, la présente invention permet de traiter facilement les données provenant d'un mobile en déplacement le long d'un chemin et n'ayant pas un caractère sécuritaire, i.e. ne nécessitant pas une transmission en temps réel à un poste de commande centralisée, tout en s'abstenant d'occuper une bande passante utilisée pour la transmission en temps réel de données sécuritaires.

**Revendications**

1. Méthode de transfert de données entre un mobile (2) et n dispositifs sol, ledit mobile (2) étant destiné à parcourir un chemin entre une position initiale A et une position finale B, lesdits n dispositifs sol étant respectivement notés $AP_1$ ,..., $AP_n$, avec $n \geq 1$ et $AP_i$ désignant le i$^{ème}$ dispositif sol avec i = 1, ...,n, le dispositif sol $AP_i$ étant disposé à une position Si d'arrêt temporaire dudit mobile le long dudit chemin, chaque dispositif sol étant configuré pour échanger au moins une donnée avec ledit mobile, la méthode comprenant les étapes suivantes :

   - lors du parcours dudit chemin par ledit mobile (2), un stockage temporaire de données dans une mémoire (22) du dispositif sol et/ou du mobile ;
   - à chaque arrêt dudit mobile à une position Si entre ladite position initiale A et ladite position finale B, un déstockage automatique d'au moins une partie desdites données stockées, au moyen d'une transmission par rafale desdites données entre le mobile (2) et ledit dispositif sol $AP_i$ durant un intervalle de temps $T_i$ inférieur ou égal au temps d'arrêt dudit mobile à ladite position Si.

2. Méthode de transfert de données selon la revendication 1 **caractérisée en ce que** lesdites données destinées à être stockées dans ladite mémoire (22) sont uniquement transmises à un dispositif sol, ou respectivement audit mobile, lorsque ledit mobile (2) est à l'arrêt à une desdites positions Si d'arrêt.

3. Méthode de transfert de données selon la revendication 1 ou 2 comprenant un découpage en paquets de données desdites données stockées, chaque paquet comprenant au moins une partie desdites données stockées, le nombre de paquets de données formé durant le déplacement dudit mobile (2) de la position initiale A à la position finale B étant égale à n, les paquets étant notés $P_1$, ..., $P_n$, $P_i$ étant le i$^{ème}$ paquet destiné à être déstocké lors de l'arrêt dudit mobile (2) à la position Si d'arrêt.

**4.** Méthode de transfert de données selon la revendication 3 **caractérisée par** un découpage de chaque paquet en sous-paquets numérotés et datés afin de déterminer la provenance de chaque sous-paquet.

**5.** Méthode de transfert de données selon une des revendications 1 à 4, **caractérisée par** une classification automatique de chaque donnée soit dans une première catégorie, soit dans une seconde catégorie, les données de ladite seconde catégorie étant stockée dans ladite mémoire (22) et uniquement transmise à chaque arrêt dudit mobile (2).

**6.** Méthode de transfert de données selon une des revendications 1 à 5, **caractérisée par** un positionnement d'un émetteur/récepteur (21) dudit mobile en vis-à-vis d'un émetteur/récepteur (11) dudit dispositif sol $AP_i$.

**7.** Système de transfert de données entre un mobile (2) et n dispositifs sol, ledit mobile (2) étant destiné à parcourir un chemin (1) entre une position initiale A et une position finale B, ledit système de transfert comprenant :

> - n dispositifs sols respectivement notés $AP_1$,..., $AP_n$, avec $n \geq 1$ et $AP_i$ désignant le $i^{ème}$ dispositif sol avec $i = 1$,...,n, le dispositif sol $AP_i$ étant destiné à être disposé à une position Si d'arrêt dudit mobile le long dudit chemin (1), chaque dispositif sol étant configuré pour échanger au moins une donnée avec ledit mobile (2), chaque dispositif sol comprenant un émetteur/récepteur (11) configuré pour communiquer avec un émetteur/récepteur (21) embarqué à bord dudit mobile (2) ;
> - au moins un émetteur/récepteur (21) et une mémoire (22) destinés à être embarqués à bord dudit mobile (2), ledit émetteur-récepteur (21) étant apte à communiquer avec l'émetteur/récepteur (11) de chacun desdits dispositifs sol $AP_i$ et ladite mémoire (22) étant configurée pour stocker au moins temporairement lesdites données;
> ladite mémoire (22) embarquée à bord dudit mobile (2) étant configurée pour automatiquement stocker lesdites données durant le parcours dudit chemin entre A et B par ledit mobile (2) et pour automatiquement déstocker au moins une partie desdites données stockées à chaque arrêt temporaire dudit mobile (2) à une position Si entre ladite position initiale A et ladite position finale B, ledit émetteur-récepteur (21) embarqué à bord dudit mobile (2) étant configuré pour transmettre lesdites données déstockées à l'émetteur-récepteur (11) du dispositif sol $AP_i$ durant un intervalle de temps $T_i$ inférieur ou égal au temps d'arrêt dudit mobile à ladite position Si.

**8.** Système de transfert de données selon la revendication 7, **caractérisé en ce que** chaque dispositif sol $AP_i$ est connecté à un poste de commande centralisée (3).

**9.** Système de transfert de données selon une des revendications 7 ou 8, **caractérisé en ce qu'**il comprend un dispositif de traitement de données (23) embarqué à bord dudit mobile (2) et capable de préparer lesdites données stockées en vue de leur déstockage.

**10.** Système de transfert de données selon la revendication 9, **caractérisé en ce que** le dispositif de traitement de données (23) est capable d'amorcer un déstockage de données préalablement stockées dans la mémoire (22) embarquée à bord dudit mobile (2) si et seulement si ledit mobile (2) s'arrête à une position Si au voisinage d'un dispositif sol $AP_i$.

**11.** Système de transfert de données selon une des revendications 9 ou 10 **caractérisé en ce que** le dispositif de traitement de données (23) est capable de créer des paquets de données $P_i$ à partir des données stockées dans ladite mémoire embarquée, et d'amorcer, à chaque arrêt dudit mobile à une position Si, le déstockage du paquet $P_i$ destiné à être transmis au dispositif sol $AP_i$.

**12.** Système de transfert de données selon une des revendications 9 à 11 **caractérisé en ce que** le dispositif de traitement de données (23) est capable de classifier lesdites données en une première catégorie et une seconde catégorie, les données de ladite première catégorie étant destinées à être transmises en temps réel à un poste de commande centralisée (3), et lesdites données de la seconde catégorie étant destinées à être stockées dans ladite mémoire (22) dudit mobile (2) pour être uniquement transmise à chaque arrêt dudit mobile à ladite position Si.

**13.** Mobile et voie de circulation dudit mobile équipés du système de transfert de données selon une des revendications 7 à 12.

FIG 1

EP 2 840 010 A1

Europäisches
Patentamt

European
Patent Office

Office européen
des brevets

**RAPPORT DE RECHERCHE EUROPEENNE**

Numéro de la demande

EP 13 29 0197

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2009/150084 A1 (SIEMENS AG [DE]; KISTER ANDREAS [DE]; SEIFERT MATTHIAS [DE]) 17 décembre 2009 (2009-12-17) | 1-4, 6-11,13 | INV. B61L3/12 B61L15/00 |
| Y | * page 1, ligne 5 - page 1, ligne 24 * * page 2, ligne 12 - page 2, ligne 30 * * page 4, ligne 22 - page 4, ligne 30 * * page 7, ligne 17 - page 13, ligne 6 * * figures 1-9 * ----- | 5,12 | B61L27/00 |
| X | WO 2009/013167 A1 (SIEMENS AG [DE]; KISTER ANDREAS [DE]) 29 janvier 2009 (2009-01-29) | 1-4, 6-11,13 | |
| Y | * page 1, ligne 7 - page 1, ligne 10 * * page 1, ligne 27 - page 3, ligne 22 * * page 5, ligne 16 - page 5, ligne 25 * * page 6, ligne 9 - page 6, ligne 13 * * page 7, ligne 7 - page 7, ligne 30 * * page 9, ligne 22 - page 9, ligne 32 * * page 10, ligne 5 - page 12, ligne 28 * * figure * ----- | 5,12 | |
| Y | WO 2004/024531 A1 (BOMBARDIER TRANSP GMBH [DE]; SMEDLEY VINCENT ARTHUR [GB]; STEIJGER LAU) 25 mars 2004 (2004-03-25) | 5,12 | DOMAINES TECHNIQUES RECHERCHES (IPC) B61L |
| A | * page 12, ligne 13 - page 3, ligne 15 * * page 7, ligne 10 - page 7, ligne 27 * * page 33, ligne 13 - page 35, ligne 26 * * figures 1,26 * ----- | 1-4, 6-11,13 | |
| Y | WO 2013/072987 A1 (MITSUBISHI ELECTRIC CORP [JP]; TSURUMOTO SHINICHI [JP]; ISHIGURI KENIC) 23 mai 2013 (2013-05-23) | 5,12 | |
| A | * alinéas [0020], [0021]; figures 1-4 * * voir aussi page 5 de la traduction automatique * ----- | 1-4, 6-11,13 | |
| A | DE 10 2006 028686 B3 (SIEMENS AG [DE]) 12 juillet 2007 (2007-07-12) * alinéas [0004] - [0007], [0011] - [0016] * ----- | 1-13 | |

| Le présent rapport a été établi pour toutes les revendications | | |
|---|---|---|
| Lieu de la recherche Munich | Date d'achèvement de la recherche 14 février 2014 | Examinateur Massalski, Matthias |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 29 0197

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-02-2014

| Document brevet cité au rapport de recherche | Date de publication | Membre(s) de la famille de brevet(s) | Date de publication |
|---|---|---|---|
| WO 2009150084 A1 | 17-12-2009 | CA 2727290 A1<br>CN 102056785 A<br>DE 102008028020 A1<br>DK 2288529 T3<br>EP 2288529 A1<br>ES 2392761 T3<br>US 2011085038 A1<br>WO 2009150084 A1 | 17-12-2009<br>11-05-2011<br>24-12-2009<br>28-01-2013<br>02-03-2011<br>13-12-2012<br>14-04-2011<br>17-12-2009 |
| WO 2009013167 A1 | 29-01-2009 | DE 102007034283 A1<br>US 2010176251 A1<br>WO 2009013167 A1 | 22-01-2009<br>15-07-2010<br>29-01-2009 |
| WO 2004024531 A1 | 25-03-2004 | AU 2003269181 A1<br>GB 2392983 A<br>GB 2409904 A<br>WO 2004024531 A1 | 30-04-2004<br>17-03-2004<br>13-07-2005<br>25-03-2004 |
| WO 2013072987 A1 | 23-05-2013 | AUCUN | |
| DE 102006028686 B3 | 12-07-2007 | AT 444221 T<br>CN 101479146 A<br>DE 102006028686 B3<br>DK 2029412 T3<br>EP 2029412 A1<br>ES 2331213 T3<br>PT 2029412 E<br>US 2010265815 A1<br>WO 2007147700 A1 | 15-10-2009<br>08-07-2009<br>12-07-2007<br>14-12-2009<br>04-03-2009<br>23-12-2009<br>03-11-2009<br>21-10-2010<br>27-12-2007 |

EPO FORM P0460